# EUROPEAN PATENT SPECIFICATION

(11) **EP 0 649 215 B1**
(45) Date of publication and mention of the grant of the patent: **09.10.1996**
(21) Application number: 94115748.9
(22) Date of filing: 06.10.1994
(51) Int. Cl.: H02M 7/00

(54) **Semiconductor apparatus**
Halbleitervorrichtung
Appareil à semi-conducteur

(30) Priority: 13.10.1993 JP 254614/93
(43) Date of publication of application: 19.04.1995
(73) Proprietor: FUJI ELECTRIC CO. LTD., Kawasaki 210 (JP)
(72) Inventor: Kobayashi, Shinichi, Kawasaki-ku, Kawasaki 210 (JP)
(74) Representative: May, Hans Ulrich, Dr.

(56) References cited:
- EP-A- 0 379 346
- US-A- 4 908 738

## Description

### [Industrial Application Field]

The present invention relates to a semiconductor apparatus for power conversion such as a VVVF inverter.

### [Prior Art]

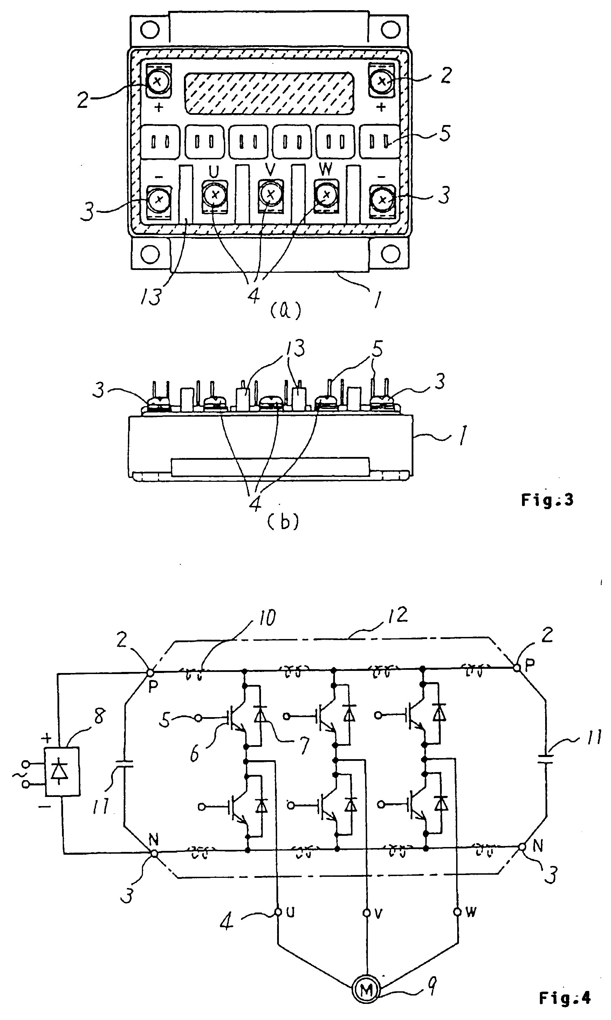

A configuration of a semiconductor apparatus according to the prior art is shown in Fig. 3 and an inverter circuit of the semiconductor apparatus is shown in Fig. 4. In Fig. 3, reference numeral 1 designates a package the faces of which are rectangular; 2 a positive DC input terminal (P); 3 a negative DC input terminal (N); 4 AC output terminals (U, V, W); and 5 a control terminal of a semiconductor chip (IGBT for example) mounted in the package 1. The terminals 2, 3, 4 and 5 are distributed on the upper face of the package 1 as illustrated in Fig. 3. In the package 1, a switching semiconductor chip is mounted as shown in Fig. 4 which is comprised of six pairs of an insulated gate bipolar transistor (IGBT) 6 and a free wheeling diode 7 which form a three phase bridge circuit. In Fig. 4, reference numeral 8 designates a rectifier circuit of a DC power supply, and 9 a motor which is connected to the AC output side and controlled at variable speed.

The speed of the motor 9 is adjusted by variably controlling the voltage and the frequency of the AC output from the AC output terminals 4 with the IGBTs 6 switched on and off at an appropriate timing.

When a main circuit current flows from the DC side to the AC side via the IGBTs 6 or from the AC side to the DC side via the IGBTs 6 and the free wheeling diodes 7 by the switching of the IGBTs 6, stray inductance 10 (inductance value L) of internal wiring on the DC side causes surge voltage L × di/dt, because variation rate of the current di/dt, in association with high speed switching of the IGBTs 6, of internal wiring on the DC side is high. The surge voltage is added to the DC input voltage and the constituent elements of the chip are broken down when the surge voltage exceeds the withstand voltage of the chip. To solve this problem, snubber capacitors 11 for surge suppression are connected between the positive and the negative DC input terminals 2 and 3 as shown in Fig. 4 to suppress the surge voltage caused by the stray inductance 10 of the internal wiring.

### [Problems to be solved by the Invention]

In the surge voltage protection circuit shown in Fig. 4, the snubber capacitor 11 connected between a pair of the DC input terminals 2, 3 on the far side (right hand side of the figure) from the DC power supply show less surge suppression than the of the capacitor 11 connected between a pair of the DC input terminals 2, 3 on the near side to the DC power supply. This problem is solved by conductor bars 12, one of which connects the positive terminals with each other and another the negative terminals with each other. In this configuration, the current in the DC side main circuit is divided into two path including the conductor bars 12, corresponding to which surge voltage is suppressed more effectively.

If one wants to adopt the above described internal configuration to the semiconductor apparatus of Fig. 3, the bars 12 can not be wired in the shortest straight distance, because the AC output terminals 4 and insulative partition walls 13 disposed between the terminals and aligned between the DC input terminals 3 obstruct straight wiring of the conductor bars 12. These obstacles elongate the conductor bar, which increases inductance component and deteriorates surge suppression effect of the snubber capacitor 11. This problem is more serious in a larger package for a semiconductor apparatus of larger current capacity, the internal wiring of which is longer.

In view of the foregoing, an object of the present invention is to provide a semiconductor apparatus which has an especially effective terminal arrangement for suppressing the surge voltage caused by the stray inductance of the internal wiring by the combination of the snubber capacitors and the conductor bars connected between the DC input terminals.

### [Means for solving the Problem]

The object of the present invention is achieved by a semiconductor apparatus, including a package in which a plurality of switching semiconductor chips, paired with a plurality of free wheeling diode chips, are incorporated, and DC input terminals AC output terminals and control terminals of semiconductor chips arranged on a rectangular upper face of the package, in which a pair of positive terminals and a pair of negative terminals of the DC input terminals are distributed on edge portions of a pair of opposed facing sides of the rectangular upper face, the positive terminals being opposed facing to each other and the negative terminals being opposed facing to each other; the AC output terminals are arranged on an edge portion of one side of another pair of opposed facing sides of the rectangular upper face; and the control terminals of semiconductor chips are arranged on an edge portion of another side of the another pair of opposed facing sides of the rectangular upper face.

It is preferable to connect a straight conductor bar on the outside of the package between the pair of positive terminals on the side of the upper face and another straight conductor bar on the outside of the package between the pair of negative terminals above the upper face. It is also preferable to position the DC terminals one step higher than a central area of the upper face.

### [Function]

In the above described configuration which connects externally a conductor bar between a pair of positive DC input terminals and another conductor bar between a pair of negative DC input terminals, a current flowing from the DC power supply to the switching semiconductor chips (IGBTs) via the DC input terminals or a current flowing from the AC power supply to the DC power supply via the switching semiconductor chips or the free wheeling diodes is divided equally to the positive pair and the negative pair of the DC input terminals. The conductor bars reduce, in cooperation with snubber capacitors connected between the positive pair and the negative pair of the DC input terminals, surge voltage caused by stray inductance of the internal wiring between the DC input terminals and the semiconductor chips to half of the surge voltage caused when the conductor bars are not used.

A pair of the positive and the negative DC input terminals are positioned on one side of the package, another pair of the positive and the negative DC input terminals are positioned on another side of the package opposed facing to the one side in such arrangement that the terminals of same polarity are opposed facing to each other, and there exist no obstacles in the wiring paths of the conductor bars. Therefore, the shortest wiring by the straight conductor bars facilitates with minimum stray inductance obtaining higher surge suppression effect.

### [Embodiments]

Now the present invention will be described in detail hereinafter with reference to the accompanied drawings which illustrate preferred embodiments of the present invention.

### [Brief Description of the Drawings]

Figures 1 (a), 1 (b) and 1 (c) show an external package configuration of the semiconductor apparatus according to the present invention, in which Fig. 1 (a) is a top view, Fig. 1 (b) is a side view, and Fig. 1 (c) is a front view;
Figure 2 is a circuit diagram of the internal circuit of the semiconductor apparatus of Figs. 1;
Figures 3 (a) and 3 (b) show an external package configuration of the semiconductor apparatus according to the prior art, in which Fig. 3 (a) is a top view, and Fig. 3 (b) is a front view; and
Figure 4 is a circuit diagram of the internal circuit of the semiconductor apparatus of Figs. 3.

### [Assignment of Reference Numerals]

1 ... package
2, 3 ... DC input terminal
4 ... AC output terminal
5 ... control terminal
6 ... IGBT (switching semiconductor chip)
7 ... free wheeling diode
11 ... snubber capacitor
12 ... conductor bar

Throughout the drawings, same parts with those in Figs. from 2 to 4 are designated by the same reference numerals.

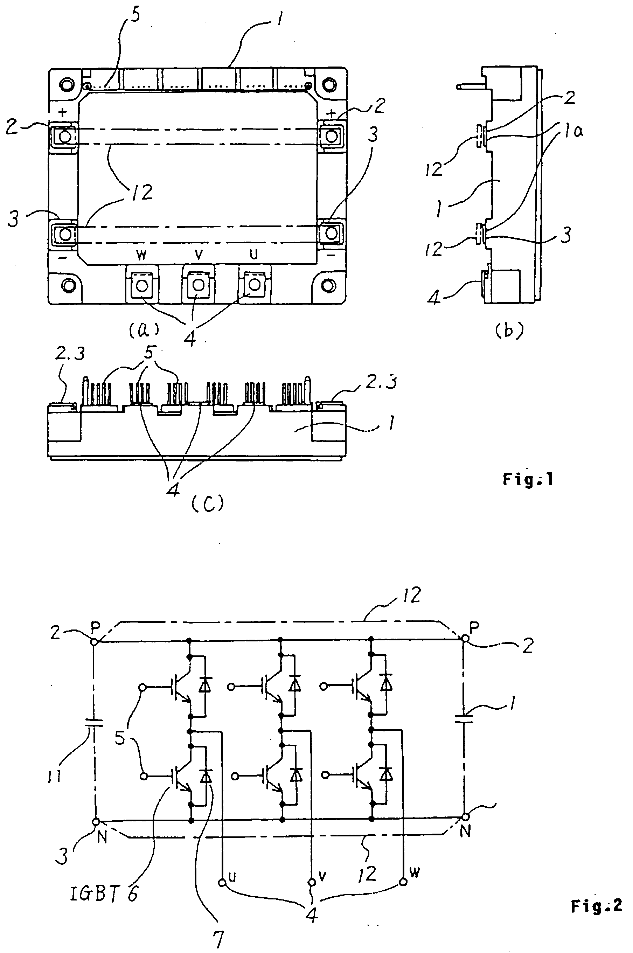

As Figs. 1 (a), 1 (b) and 1 (c) show, a pair of positive and negative terminals 2, 3 are arranged on the edge portion of the left side of a rectangular upper face of the package 1 and another pair of positive and negative terminals 2, 3 are arranged on the edge portion of the right side, with the positive terminals 2, 2 opposed facing to each other and the negative terminals 3, 3 opposed facing to each other. AC output terminals 4 are aligned on one of the other pair of the sides (upper side) and control terminals 5 on another side of the other side pair. The DC input terminals 2, 3 are positioned. one step higher from the central area of the upper face of the package 1 on protrusions 1a formed on the peripheral portion of the upper face. A bridge circuit comprised of six pairs of IGBTs 6 and free wheeling diodes 7 as shown in Fig 4 is mounted in the package 1.

When this semiconductor apparatus is used as an inverter, a conductor bar 12 is connected between the positive terminals 2, 2 and another conductor bar 12 between the negative terminals 3, 3. Snubber capacitors 11, 11 are connected between positive and negative pairs (2, 3), (2, 3) of the DC input terminals as shown In Fig. 2. By this configuration, surge voltage, caused by stray inductance of the internal wiring when the semiconductor apparatus is in operation, is effectively suppressed. As illustrated in Figs. 1, straight conductor bars can be connected in the shortest distance between the positive terminals 2, 2 and the negative terminals 3, 3, by which higher surge suppression effect is obtained, since there exist no obstacles protruding into the wiring paths between the terminals 2 and 2, and the terminals 3 and 3.

### [Effect of the Invention]

According to the present invention, which facilitates connecting the DC input terminals of same polarity with the shortest conductor bar, without being restricted by the AC output and the control terminals, for suppressing surge voltage caused by the stray inductance of the internal wiring in cooperation with the snubber capacitors, high surge suppression effect is obtained. Since the present invention facilitates suppressing internal surge voltage in a semiconductor apparatus of large current capacity mounted in a large package in which the internal wiring length becomes long and maintaining required withstand voltage of the semiconductor chip at a not too high value, the configuration of the present invention is effective to improve performance of the semiconductor apparatus such as to reduce ON voltage, to shorten switching time, and to reduce switching loss.

## Claims

1. A semiconductor apparatus for converting DC input power to AC output power, including a package (1) in which a plurality of semiconductor chips are incorporated, and DC input terminals (2,3), AC output terminals (4) and control terminals of semiconductor chips (5) are arranged on a rectangular upper face of said package,
**characterized in that** a pair of positive terminals (2) and a pair of negative terminals (3) of said DC input terminals are distributed on edge portions of a pair of opposed facing sides of said rectangular upper face, said positive terminals (2) being opposed facing to each other and said negative terminals (3) being opposed facing to each other;
that said AC output terminals (4) are arranged on an edge portion of one side of another pair of opposed facing sides of said rectangular upper face; and
that said control terminals of semiconductor chips (5) are arranged on an edge portion of another side of said another pair of opposed facing sides of said rectangular upper face.

2. The semiconductor apparatus as claimed in claim 1,
**characterized in that** a straight conductor bar (12) is connected outside said package between said pair of positive terminals (2) on the side of said upper face and a straight conductor bar (12) is connected outside said package between said pair of negative terminals (3) above said upper face.

3. The semiconductor apparatus as claimed in claim 1 or 2,
**characterized in that** said DC terminals (2,3) are positioned one step higher than a central area of said upper face.

## Patentansprüche

1. Halbleitervorrichtung zur Konvertierung von Eingangs-Gleichstrom in Ausgangs-Wechselstrom mit einem Block (1), in den eine Mehrzahl von Halbleiterchips eingebaut sind, und mit auf einer rechteckigen oberen Fläche des Blocks angeordneten Gleichstrom-Eingangsanschlüssen (2, 3), Wechselstrom-Ausgangsanschlüssen (4) und Steuerungsanschlüssen (5) der Halbleiterchips, **dadurch gekennzeichnet**, **daß** ein Paar von positiven Anschlüssen (2) und ein Paar von negativen Anschlüssen (3) der Gleichstrom-Eingangsanschlüsse auf Randabschnitten eines Paars von gegenüberliegenden Seiten der rechteckigen oberen Fläche verteilt sind, wobei die positiven Anschlüsse (2) einander gegenüberliegend und die negativen Anschlüsse (3) einander gegenüberliegend sind, daß die Wechselstrom-Ausgangsanschlüsse (4) auf einem Randabschnitt einer Seite eines anderen Paars von gegenüberliegenden Seiten der rechteckigen oberen Fläche angeordnet sind und daß die Steuerungsanschlüsse (5) der Halbleiterchips auf einem Randabschnitt einer anderen Seite des anderen Paars von gegenüberliegenden Seiten der rechteckigen oberen Fläche angeordnet sind.

2. Halbleitervorrichtung nach Anspruch 1, **dadurch gekennzeichnet, daß** eine gerade Leiterschiene (12) außerhalb des Blocks mit beiden Anschlüssen des Paars von positiven Anschlüssen (2) auf der Seite der oberen Fläche und eine gerade Leiterschiene (12) außerhalb des Blocks mit beiden Anschlüssen des Paars von negativen Anschlüssen (3) oberhalb der oberen Fläche verbunden ist.

3. Halbleitervorrichtung anch Anspruch 1 oder 2, **dadurch gekennzeichnet, daß** die Gleichstromanschlüsse (2, 3) eine Stufe höher als eine Mittelfläche der oberen Fläche angeordnet sind.

## Revendications

1. Dispositif à semi-conducteur pour convertir une puissance d'entrée à courant continu en une puissance de sortie à courant alternatif, comprenant un boîtier (1) dans lequel une pluralité de puces à semi-conducteurs sont intégrées, et des bornes (2,3) d'entrée à courant continu, des bornes (4) de sortie à courant alternatif et des bornes (5) de commande de puces à semi-conducteurs, sont disposées sur une face supérieure rectangulaire du boîtier, caractérisé en ce qu'une paire de bornes (2) positives et une paire de bornes (3) négatives de ces bornes d'entrée à courant continu, sont réparties sur des parties de bords d'une paire de côtés opposés de la face supérieure rectangulaire, les bornes (2) positives étant opposées les unes aux autres et les bornes (3) négatives étant opposées les unes aux autres;
en ce que les bornes (4) de sortie à courant alternatif sont agencées sur une partie de bord d'un côté d'une autre paire de côtés opposés de la face supérieure rectangulaire; et
en ce que les bornes (5) de commande de puces à semi-conducteurs sont agencées sur une partie de bord d'un autre côté de l'autre paire de côtés opposés de la face supérieure rectangulaire.

2. Dispositif à semi-conducteur selon la revendication 1, caractérisé en ce qu'une barre (12) conductrice droite est connectée à l'extérieur du boîtier entre la paire de bornes (2) positives se trouvant sur le côté de la face supérieure, et une barre (12) conductrice droite est connectée à l'extérieur du boîtier entre la paire de bornes (3) négatives, au-dessus de la face supérieure.

3. Dispositif à semi-conducteur selon la revendication 1 ou 2, caractérisé en ce que les bornes (2,3) à courant continu sont positionnées un échelon plus haut qu'une zone centrale de la face supérieure.
